# EUROPEAN PATENT APPLICATION

(11) **EP 3 629 455 A1**
(43) Date of publication of application: **01.04.2020**
(21) Application number: 18197656.4
(22) Date of filing: 28.09.2018
(51) Int. Cl.: H02K 15/03

(54) **METHOD FOR MANUFACTURING A ROTOR OF AN ELECTRIC MOTOR**

(71) Applicant: Valeo Systèmes d'Essuyage, 78322 Le Mesnil Saint Denis (FR)
(72) Inventor: SERVIN, Alain, 86108 CHATELLERAULT (FR); GUYONNET, Vincent, 86108 CHATELLERAULT (FR); DELAGE, Thierry, 86108 CHATELLERAULT (FR)
(74) Representative: Valeo Systèmes d'Essuyage

(57) **Abstract**

The invention relates to a method for manufacturing a rotor for an electric motor (2) of a wiper system for an automotive vehicle, the method comprising a step of forming a chassis (22) of the rotor (1), the step of forming said chassis (22) comprising overmolding at least one magnet (7) on at least one flange (20) for closing magnetic field lines.

## Description

The present invention relates to a method for manufacturing a rotor for an electric motor, preferably a brushless motor, for a wiper system of an automotive vehicle.

Electric motors comprise, in the most general sense, two main components: a stator, which remains stationary; and a rotor, which rotates within the stator. Both the rotor and the stator comprise means for generating a magnetic field, the magnetic field of the stator interacting with the magnetic field of the rotor in such a way as to drive the latter in rotation.

One configuration of particular interest is the brushless motor, wherein the rotor comprises a chassis holding a plurality of permanent magnets while the stator comprises electromagnetic excitation coils. This chassis may be, for instance, cylinder-, disc-, bell-, or puck-shaped.

The electric motor is configured so that when the coils are powered with electric current, a magnetic field is created. The magnetic field of the stator excitation coils interacts with the magnetic field of the rotor permanent magnets, exerting a force on the rotor and causing a rotational movement of the magnets about an axis of rotation.

It is sometimes advantageous to provide the brushless motor with a gear reduction drive. Also, in a brushless motor, the excitation coils of the stator are switched by an electronic control system, which energizes the excitation coils with precise timing so as to generate the desired rotation of the rotor.

In some implementations, the rotor further comprises a shaft comprising an endless screw whose external threads mesh with teeth of a wheel, the wheel being fixed to an output shaft of the motor.

The rotor magnets are usually fixed to the chassis with strong glue that can be a harmful substance, particularly to the person assembling the motor.

Additionally, the chassis might not be firmly attached, which degrades the performances of the electric motor.

Furthermore, there is a need to make the manufacturing method as simple as possible to reduce its cost and time.

The present invention aims at overcoming or mitigating at least some of these shortcomings.

To this end, the present invention relates to a method for manufacturing a rotor for an electric motor of a wiper system for an automotive vehicle, the method comprising a step of forming a chassis of the rotor, the step of forming said chassis comprising overmolding at least one magnet on at least one flange.

The claimed method is particularly easy to implement, reducing its cost and time.

Thanks to the presence of the at least one flange on which the at least one magnet is overmolded, the magnetic field lines of the rotor, and therefore the magnetic circuit of the rotor, are closed.

Also, thanks to the present invention, the magnets are securely attached, which ensures optimized performances of the motor.

According to another aspect of the invention, said at least one flange comprises slots for determining a rotation speed of the rotor.

According to another aspect of the invention, said at least one magnet is overmolded on two flanges, the method comprising a step of contacting the flanges one with another.

According to another aspect of the invention, the two flanges are identical and positioned head to tail.

According to another aspect of the invention, the method comprises a step of fixing the flanges one to another.

According to another aspect of the invention, the method comprises a step of mounting the chassis on a shaft comprising an endless screw.

According to another aspect of the invention, the method comprises a chassis, said chassis comprising at least one magnet overmolded on at least one flange for closing magnetic field lines.

The invention also relates to a rotor for an electric motor of a wiper system for an automotive vehicle, comprising a chassis, said chassis comprising at least one magnet overmolded on at least one flange for closing magnetic field lines.

According to another aspect of the invention, said at least one flange comprises slots for determining a rotation speed of the chassis.

According to another aspect of the invention, the rotor comprises two flanges positioned head to tail.

The invention also relates to an electric motor comprising a rotor as already described.

The invention also relates to a wiper system comprising an electric motor as already described.

The present invention is now described by way of example with reference to the accompanying drawings in which:
- Figure 1 is a perspective view of an electric motor comprises a rotor as per the present invention;
- Figure 2 is a perspective view of a rotor according to a first embodiment of the present invention;
- Figure 3 is an axial section of the rotor of figure 2;
- Figure 4 is an exploded view of a chassis of the rotor of figure 2;
- Figure 5 is an axial section of a rotor according to a second embodiment of the present invention;
- Figure 6 is an exploded view of a chassis of the rotor of figure 5;
- Figure 7 is an axial section of a rotor according to a third embodiment of the present invention;
- Figure 8 is a perspective view a chassis of the rotor of figure 7; and
- Figure 9 is an exploded view of the chassis of figure 8.

### Electric motor

The invention relates to a rotor 1 of an electric motor 2 for a wiper system and the associated method for manufacturing the rotor 1.

The electric motor is preferably brushless.

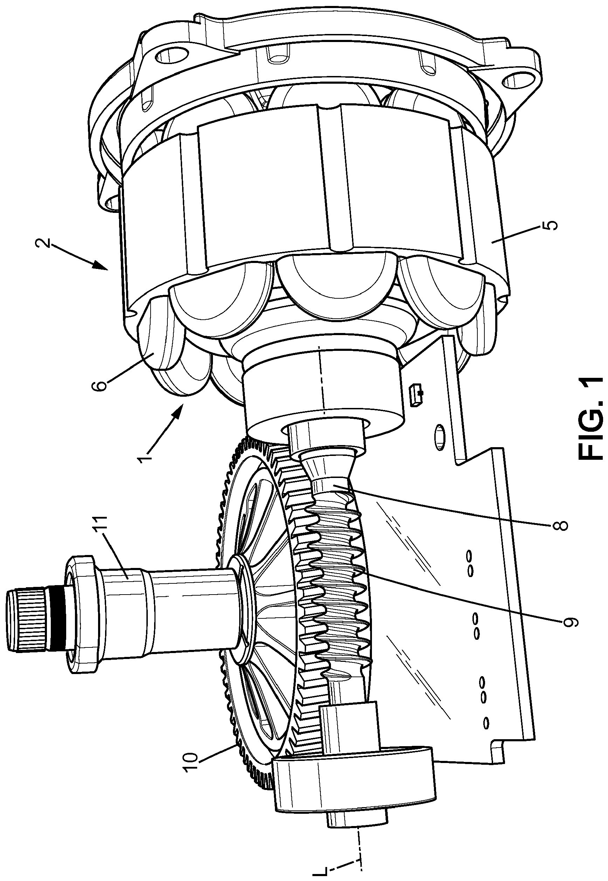

As can be seen from figure 1, the electric motor 2 comprises a stator 5.

The stator 5 comprises a plurality of electromagnetic excitation coils 6 of the rotor 1.

The rotor 1 comprises at least one multipole magnet 7, detailed later, and mounted to be driven in a rotational movement about an axis of rotation, referenced L.

The electric motor 2 is configured so that the rotor 1 rotates in the stator 5, which causes a rotation of a shaft 8 extending along the axis of rotation L.

The shaft 8 comprises a threaded portion 9 mounted to be engaged by a gear wheel 10.

The wheel 10 rotates an output shaft 11.

The output shaft 11 is substantially perpendicular to the drive shaft 8.

### Rotor

As already explained, the rotor 1 comprises at least one magnet 7.

On the illustrated embodiments, the rotor 1 comprises a single magnet 7 which has a shape of an open cylinder.

The rotor 1 also comprises at least one flange 20 for closing lines of the magnetic field generated by the magnetic coils.

Each flange 20 is advantageously made of soft iron.

Each flange has a shape of an open cylindrical delimiting a passage 21 for the shaft 8.

The flanges will be described in more details below.

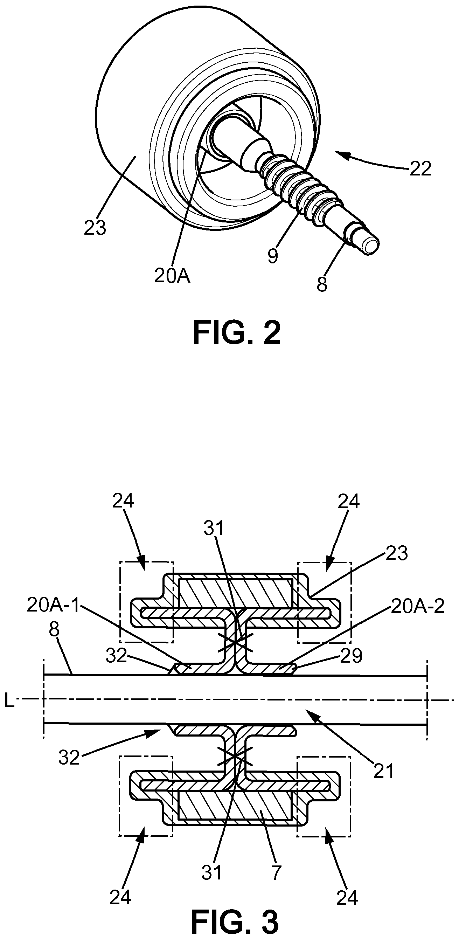

As can be seen from figures 2 to 9, the magnet 7 is overmolded on each flange 20 so as to form a chassis 22.

The overmolding material is referenced 23 on the figures.

The chassis 22 comprises at least one area 24 from which material can be removed for balancing the motor 2.

### First embodiment

The rotor 1 is now described in reference to the embodiment of figures 2-4.

As can be seen from figures 2-4, the rotor 1 comprises two flanges 20-1 and 20-2.

The flanges 20-1, 20-2 are identical.

Each flange 20-1, 20-2 comprises a longitudinal cylindrical surface 25 delimiting two ends 26, 27 of the flange 20-1, 20-2.

The end 26 is open while the end 27 comprises a radial surface 28 provided with a central open protuberance 29 extending inside and parallel to the surface 25.

As best seen from figure 3, the flanges 20 are disposed head to tail, the radial surface 28 of the flange 20-1 contacting the radial surface 28 of the flange 20-2.

The protuberances 29 of the flanges 20-1 and 20-2 constitute the passage 21 of the shaft 8.

The flanges 20-1, 20-2 are fixed one to another preferably by laser welding. The laser welding points are referenced 30.

The flanges 20-1, 20-2 are located inside the magnet 7.

Overmolding material 23 is disposed around the magnet 7, around the ends 26 to the ends 27 and along the surfaces 25 of the flanges 20-1 and 20-2.

### Second embodiment

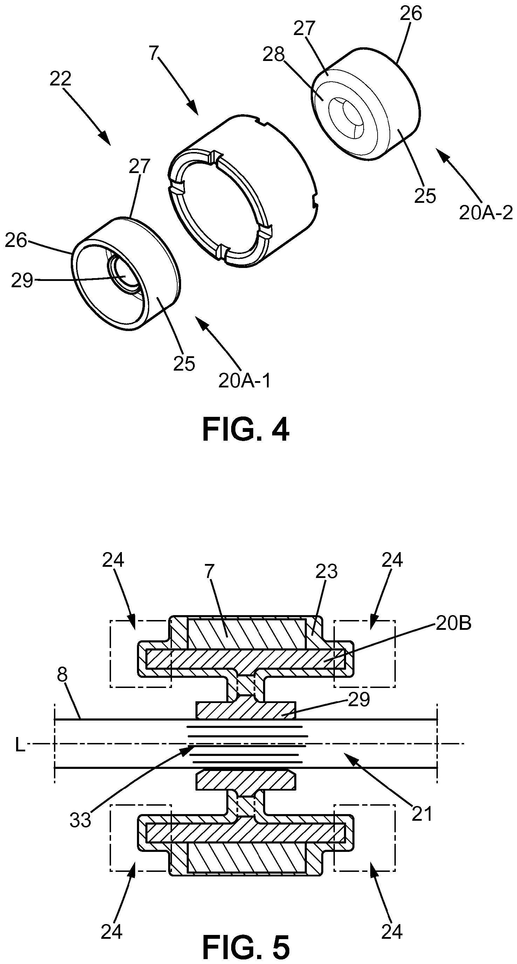

The rotor 1 is now described in reference to the embodiment of figures 5-6.

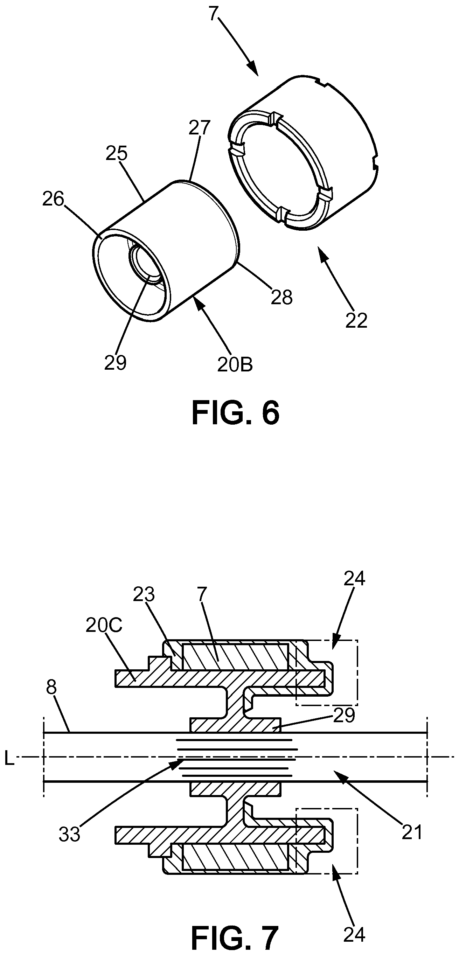

As can be seen from figures 5 and 6, the rotor 1 comprises a single flange 20.

The flange 20 comprises a longitudinal cylindrical surface 25 delimiting two ends 26, 27 of the flange 20.

The end 26 is open while the end 27 comprises a radial surface 28 provided with a central open protuberance 29 extending inside and parallel to the surface 25.

The protuberance 29 forms the passage 21 of the shaft 8.

The flange 20 is located inside the magnet 7.

Overmolding material 23 is disposed around the magnet 7, around the end 26 to the end 27 and along the surfaces 25 of the flange 20.

### Third embodiment

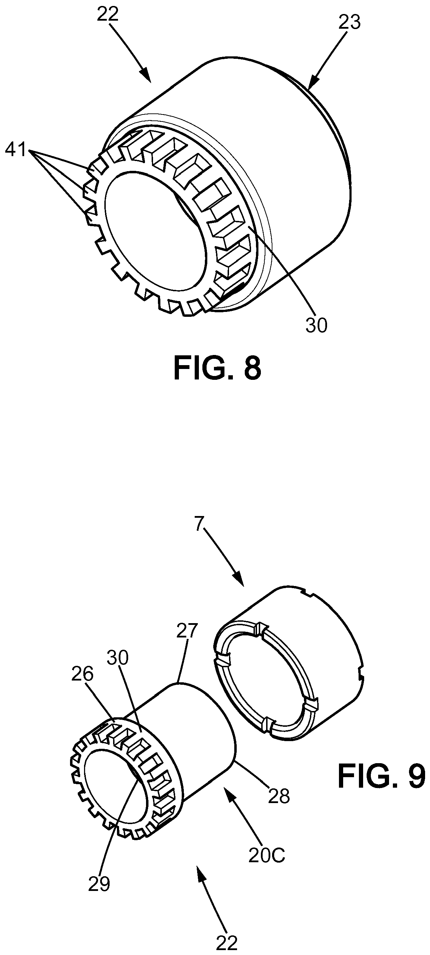

The rotor 1 is now described in reference to the embodiment of figures 8-9.

As can be seen from these figures, the rotor 1 comprises a single flange 20.

The flange 20 comprises a longitudinal cylindrical surface 25 delimiting two ends 26, 27 of the flange 20.

The end 26 is open while the end 27 comprises a radial surface 28 provided with a central open protuberance 29 extending inside and parallel to the surface 25.

The protuberance 29 forms the passage 21 of the shaft 8.

The end 26 comprises a shoulder 30 provided with slots 31 for detecting the position of the shaft 8 when the rotor 1 rotates, hence determining its rotation speed.

The flange 20 is located inside the magnet 7.

Overmolding material 23 is disposed around the magnet 7, around the end 27 and along the surface 25 of the flange 20.

The shoulder 30 protrudes outside the magnet 7 and is not covered by overmolding material 23.

### Process for manufacturing

The invention is now described in relation with the process for manufacturing the rotor 1.

The method comprises a step of forming the chassis 22, by overmolding the magnet 7 on each flange 20.

The method comprises a preliminary step of positioning each flange 20 in the magnet 7.

For the first embodiment of figures 2-4, the method comprises a step of sliding the flanges 20-1, 20-2 inside the magnet 7 so that the surfaces 28 contact each other.

The method also comprises a step of laser welding the flanges 20-1, 20-2 to fix them together (points 31 on figure 3).

For the second embodiment of figures 5-6, the method comprises a step of sliding the flange 20 inside the magnet 7.

And, for the third embodiment of figures 7-8, the method comprises a step of sliding the flange 20 inside the magnet 7, the end 26 protruding outside the magnet 7.

The method then comprises a step of assembling the chassis 22 to the shaft 8.

Assembling the chassis 22 to the shaft 8 comprises sliding the shaft 8 in the protuberance(s) 29 of the flange(s) 20 and then fixing the shaft to the chassis 22, for instance with laser welding (points 32 on figure 3) and/or thanks to notches 33 (figures 5 and 7 on the shaft 8).

## Claims

1. Method for manufacturing a rotor (1) for an electric motor (2) of a wiper system for an automotive vehicle, the method comprising a step of forming a chassis (22) of the rotor (1), the step of forming said chassis (22) comprising overmolding at least one magnet (7) on at least one flange (20).

2. Method of the preceding claim, wherein said at least one flange (20) comprises slots (31) for determining a rotation speed of the chassis (22).

3. Method of claims 1 or 2, wherein said at least one magnet (7) is overmolded on two flanges (20-1, 20-2), the method comprising a step of contacting the flanges (20-1, 20-2) one with another.

4. Method of the preceding claim, wherein the two flanges (20-1, 20-2) are identical and positioned head to tail.

5. Method of the preceding claim, comprising a step of fixing the flanges (20-1, 20-2) one to another.

6. Method of any of the preceding claims, comprising a step of mounting the chassis (22) on a shaft (8) comprising an endless screw (9).

7. Rotor for an electric motor of a wiper system for an automotive vehicle, comprising a chassis (22), said chassis (22) comprising at least one magnet (7) overmolded on at least one flange (20) for closing magnetic field lines.

8. Rotor of the preceding claim, wherein said at least one flange (20) comprises slots (31) for determining a rotation speed of the chassis (22).

9. Rotor of the preceding claim, comprising two flanges (20-1, 20-2) positioned head to tail.

10. Electric motor comprising a rotor of any of claims 7-9.

11. Wiper system comprising an electric motor of the preceding claim.
